# EUROPÄISCHE PATENTSCHRIFT

(11) **EP 2 436 500 B1**
(45) Veröffentlichungstag und Bekanntmachung des Hinweises auf die Patenterteilung: **17.02.2016**
(21) Anmeldenummer: 11181338.2
(22) Anmeldetag: 15.09.2011
(51) Int. Cl.: B29C 45/26, B29C 45/37, B29C 45/84

(54) **Spritzgussverfahren und Spritzgusswerkzeug zur wahlweisen Herstellung von Formteilen mit und ohne Durchbruch**
Injection moulding method and mould for selective production of mould with and without perforation
Procédé de moulage par injection et moule pour la fabrication sélective de pièces moulées avec ou sans rupture

(30) Priorität: 29.09.2010 DE 102010041681
(43) Veröffentlichungstag der Anmeldung: 04.04.2012
(73) Patentinhaber: BSH Hausgeräte GmbH, 81739 München (DE)
(72) Erfinder: Betz, Joachim, 73431 Aalen (DE); Gerstner, Norbert, 89542 Herbrechtingen (DE)

(56) Entgegenhaltungen:
- EP-A1- 1 300 446
- EP-A1- 1 602 623
- WO-A1-03/006221
- WO-A1-2004/052541
- JP-A- H01 171 177

## Beschreibung

Die Erfindung betrifft ein Spritzgussverfahren zur wahlweisen Herstellung von Formteilen mit und ohne Durchbruch gemäß dem Oberbegriff des unabhängigen Anspruchs 1. Weiterhin betrifft die Erfindung ein Spritzgusswerkzeug zur wahlweisen Herstellung von Formteilen mit und ohne Durchbruch gemäß dem Oberbegriff des unabhängigen Anspruchs 4.

Ein Spritzgussverfahren zur wahlweisen Herstellung von Formteilen mit und ohne Durchbruch gemäß dem Oberbegriff des unabhängigen Anspruchs 1 ist beispielsweise aus der Druckschrift EP 1 602 623 A1 bekannt.

Bei den üblicherweise bekannten Spritzgussverfahren zur wahlweisen Herstellung von Formteilen mit und ohne Durchbruch besteht die Gefahr, dass der Formkern, wenn er am Ende seiner Vorschubbewegung auf die Innenseite der anderen, insbesondere der düsenseitigen, Werkzeugplatte auftrifft, zumindest nach längerer Betriebsdauer beziehungsweise nach einer Vielzahl von Spritzgussschüssen und damit einhergehender Schließstellungen der beiden Werkzeugplatten auf der Innenseite der anderen, insbesondere der düsenseitigen, Werkzeugplatte einen bleibenden Abdruck hinterlässt. Dieser Abdruck ist auf der entsprechenden Seite des Formteils erkennbar, was insbesondere dann nicht tolerierbar ist, wenn diese Seite die Sichtseite des Formteils ist und ein optisch ansprechendes Design aufweisen soll, beispielsweise hochglänzend ist.

Die Erfindung betrifft insbesondere ein Spritzgussverfahren zur wahlweisen Herstellung von Formteilen mit und ohne Durchbruch. Bei einem solchen Verfahren kommt ein Spritzgusswerkzeug zum Einsatz, welches mindestens einen von einer oder mehreren düsenseitigen und einer oder mehreren auswerferseitigen Werkzeugplatten umgrenzten Formhohlraum und einen in dem Formhohlraum positionierbaren Formkern umfasst. Unter einer düsenseitigen Werkzeugplatte, die auch aus mehreren Teilplatten bestehen kann, ist insbesondere eine solche Werkzeugplatte zu verstehen, welche an einer Spritzgussmaschine ortsfest gehalten ist und über die mit Hilfe eines Angusskanals eine schmelzflüssige Kunststoffmasse in den Formhohlraum eingespritzt wird. Das Spritzgusswerkzeug kann natürlich auch mehrere solcher Formhohlräume aufweisen. Gegenüber der vorzugsweise ortsfesten, vorzugsweise düsenseitigen Werkzeugplatte kann zweckmäßigerweise die auswerferseitige Werkzeugplatte beweglich ausgebildet sein. An ihr kann zweckmäßigerweise der Formkern vorzugsweise wiederlösbar oder relativ beweglich angebracht sein.

Verallgemeinert ausgedrückt ist also mindestens eine erste Werkzeugplatte gegenüber mindestens einer zweiten Werkzeugplatte relativ beweglich. Der Formkern kann dabei der ersten und/oder der zweiten Werkzeugplatte zugeordnet sein oder insbesondere in sonstiger geeigneter Weise in dem zwischen den mindestens zwei Werkzeugplatten gebildeten und von ihnen umgrenzten Formhohlraum hinein- und herausbeweglich angeordnet sein.

Zur Herstellung eines Formteils mit einem Durchbruch wird der Formkern in dem Formhohlraum positioniert, das heißt er besetzt darin einen dem späteren Durchbruch entsprechenden Bereich des Formhohlraums. Zur Herstellung eines Formteils ohne Durchbruch wird der Formkern zumindest teilweise aus dem Formhohlraum entfernt. Der bei dem Spritzgussverfahren verwendete Formkern ist weiterhin in einer Vorschub- und Rückschubrichtung vorzugsweise gegenüber der anderen, insbesondere düsenseitigen, Werkzeugplatte beweglich, wobei er bei einer Bewegung in Vorschubrichtung der anderen, insbesondere düsenseitigen, Werkzeugplatte angenähert wird und sich bei einer Bewegung in Rückschubrichtung von dieser entfernt.

Die Aufgabe der vorliegenden Erfindung ist es, ein Spritzgussverfahren und ein dafür geeignetes Spritzgusswerkzeug vorzuschlagen, mit welchen eine Beeinträchtigung der Sichtseite eines Formteils infolge einer Wechselwirkung des Formkerns mit der die Sichtseite bildenden Innenseite einer Werkzeugplatte, üblicherweise der düsenseitigen Werkzeugplatte, verhindert oder zumindest verringert ist.

Diese erfindungsgemäße Aufgabe wird bei einem Spritzgussverfahren gemäß dem Oberbegriff des unabhängigen Anspruchs 1 dadurch gelöst, dass die mindestens eine Schutzmaßnahme darin besteht, dass ein Formkern verwendet wird, an dessen einer Werkzeugplatte zugewandtem Ende ein Schutzelement aus einem Material fixiert ist, welches eine geringere Verschleißfestigkeit aufweist als das Material der Werkzeugplatte mit der der Formkern zusammenwirkt.

Auf diese Weise lassen sich von einem Formteil in vorteilhafter Weise zum Beispiel Varianten herstellen, die bei prinzipiell gleicher Form und Abmessung sich insbesondere lediglich durch das Vorhandensein eines oder mehrerer Durchbrüche unterscheiden, wobei aber eine Beeinträchtigung der Sichtseite von Formteilen ohne Durchbruch verhindert oder zumindest verringert ist.

Die erfindungsgemäße Aufgabe wird bei einem Spritzgusswerkzeug gemäß dem Oberbegriff des unabhängigen Anspruchs 4 dadurch gelöst, dass an dem mit einer Werkzeugplatte, insbesondere mit der düsenseitigen Werkzeugplatte, zusammenwirkenden Ende des Formkerns ein Schutzelement aus einem Material fixiert ist, welches eine geringere Verschleißfestigkeit aufweist als das Material dieser Werkzeugplatte.

Vorzugsweise lassen sich nach dem erfindungsgemäßen Verfahren Formteile wie zum Beispiel Sichtpaneelen für Haushaltsgeräte wie zum Beispiel Geschirrspülmaschinen, Waschmaschinen, Wäschetrockner, Herde, und so weiter oder dergleichen weitgehend frei von Schädigungen der Sichtflächen der Formteile herstellen. Insbesondere ist vermieden, dass die bei der Herstellung des jeweiligen Formteils verwendeten Werkzeuge sichtbar störende Abdrücke an der jeweiligen Sichtfläche des jeweiligen Formteils verursachen. Insbesondere können auf diese Weise Bedienblenden, bevorzugt für Haushaltsgeräte, wo die ästhetischen Anforderungen besonders hoch sind, einwandfrei hergestellt werden.

Die vorstehend erläuterten und/oder in den Unteransprüchen wiedergegebenen vorteilhaften Aus- und Weiterbildungen der Erfindung können dabei - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile, insbesondere die verschiedenen Varianten von Schutzmaßnahmen beziehungsweise Schutzeinrichtungen, werden nun unter Bezugnahme auf die beigefügten Zeichnungen näher erläutert.

Es zeigen jeweils in schematisierter Schnittdarstellung
- Fig.1: ein Spritzgusswerkzeug mit einer düsenseitigen und einer auswerferseitigen Werkzeugplatte, wobei diese einen Formhohlraum umgrenzen, und einem als beweglicher Stempel ausgeführten Formkern;
- Fig. 2: einen perspektivischen Ausschnitt des Spritzgusswerkzeugs von Fig. 1, dessen Formhohlraum zur Herstellung eines Formteils ohne Durchbruch mit Kunststoffmaterial gefüllt ist;
- Fig. 3: einen perspektivischen Ausschnitt des aus dem Spritzgusswerkzeug von Fig. 2 ausgeworfenen Formteils;
- Fig. 4: ein Spritzgusswerkzeug mit einem Formkern, der an der auswerferseitigen Werkzeugplatte lösbar fixiert ist;
- Fig. 5: ein aus dem Spritzgusswerkzeug von Fig. 4 ausgeworfenes Formteil;
- Fig. 6: ein Fig. 4 entsprechendes Spritzgusswerkzeug, wobei jedoch der einen Durchbruch in einem Formteil erzeugende Formkern durch einen Formkern ersetzt ist, der keinen Durchbruch erzeugt;
- Fig. 7: ein mit dem Spritzgusswerkzeug von Fig. 6 hergestelltes Formteil;
- Fig. 8: ein Spritzgusswerkzeug, an dessen der düsenseitigen Werkzeugplatte zugewandtem Ende ein Schutzelement aus einem Material fixiert ist, das eine geringere Verschleißfestigkeit aufweist als das Material der Werkzeugplatte; und
- Fig. 9: ein Spritzgusswerkzeug, mit einer alternativen Anordnung der auswerferseitigen und düsenseitigen Werkzeugplatte.

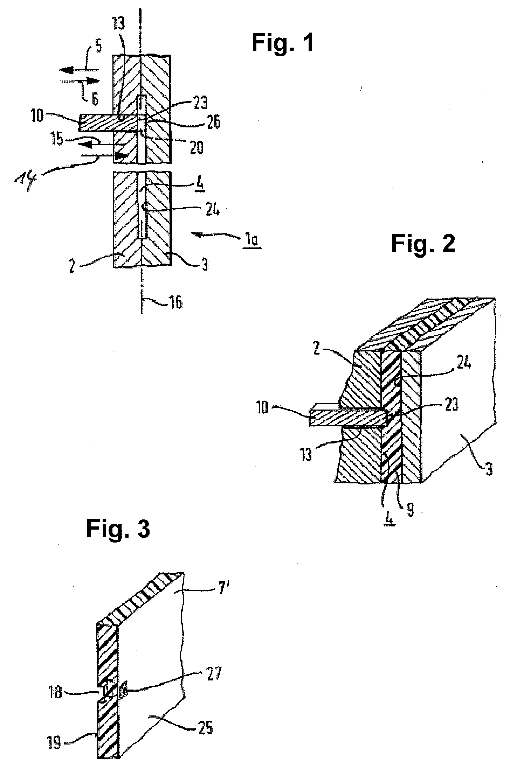

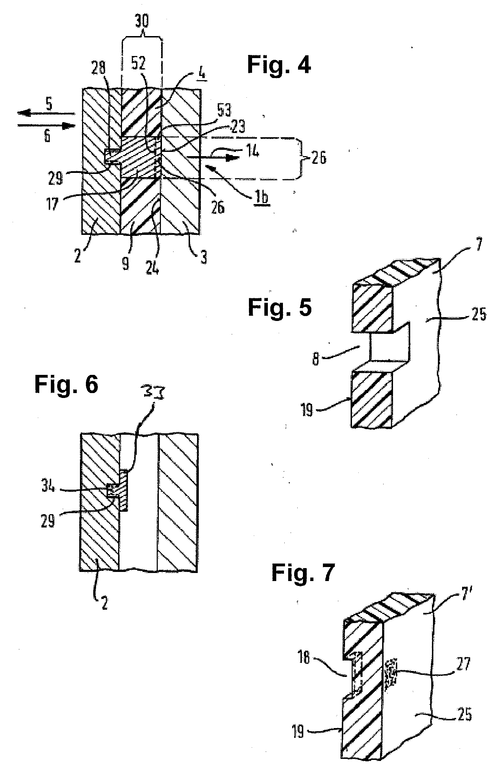

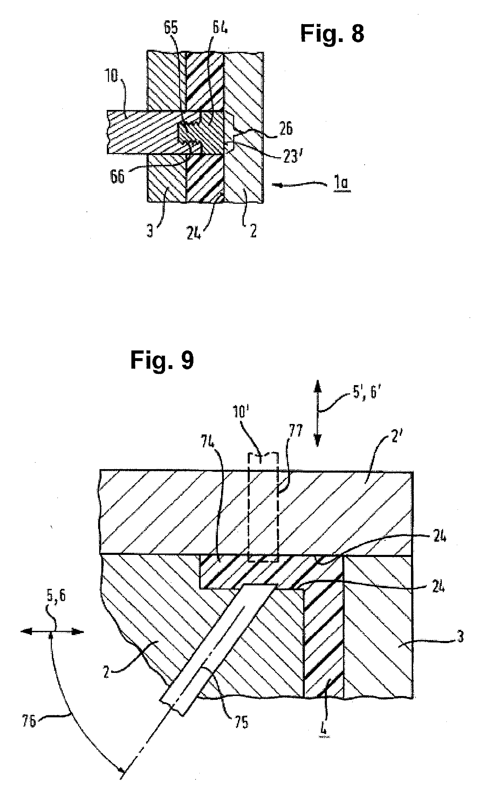

Zur Herstellung von Formteilvarianten mit und ohne Durchbruch, beispielsweise von Sichtpaneelen, insbesondere Bedienblenden, für Haushaltsgeräte wie zum Beispiel Geschirrspülmaschinen, Waschmaschinen, Herde und so weiter, oder dergleichen sind prinzipiell zwei Verfahrensvarianten beziehungsweise Werkzeugvarianten möglich. Die erste Variante ist beispielsweise in Fig. 1, die zweite Variante beispielsweise in Fig. 4 gezeigt. Beiden Varianten ist gemeinsam, dass das Spritzgusswerkzeug 1a, 1 b zumindest zwei Werkzeugplatten, nämlich eine auswerferseitige Werkzeugplatte 2 und eine düsenseitige Werkzeugplatte 3, die gegebenenfalls jeweils aus Teilplatten aufgebaut sein können, aufweist, welche einen Formhohlraum 4 umgrenzen. In den Abbildungen (bis auf Fig. 9) sind aus Gründen einer einfacheren Erläuterung der Erfindung lediglich eine düsenseitige und eine auswerferseitige Werkzeugplatte gezeigt, wobei sich diese gegenüberliegen. Das Einspritzen von schmelzflüssigem Kunststoffmaterial in den Formhohlraum 4 erfolgt über eine Spritzdüse (nicht dargestellt) von der düsenseitigen Werkzeugplatte 3 her. Das Spritzgusswerkzeug 1a, 1 b ist in üblicher Weise an dem Gestell einer Spritzgussmaschine (nicht gezeigt) fixiert. Die düsenseitige Werkzeugplatte 3 ist hierzu Ausführungsbeispiel ortsfest und die auswerferseitige Werkzeugplatte 2 in Öffnungsrichtung 5 beziehungsweise in Schließrichtung 6 beweglich gelagert. Bei beiden Varianten ist ein Formkern 10, 17 vorgesehen, wobei dieser beziehungsweise ein Teilbereich von ihm im Falle der Herstellung eines Formteils 7 mit Durchbruch 8 (Fig. 5) innerhalb des Formhohlraums so positioniert wird, dass er darin beim Einspritzen von Kunststoffmaterial 9 einen der Form des späteren Durchbruchs 8 entsprechenden Bereich des Formhohlraums 4 freihält.

Bei der in Fig. 1 gezeigten Variante des Spritzgusswerkzeugs 1a ist der Formkern 10 als beweglicher Stempel ausgebildet. Der Formkern 10 durchsetzt eine Öffnung 13 in der düsenseitigen Werkzeugplatte 2 und ist darin in einer Vorschubrichtung 14 und einer Rückschubrichtung 15 beweglich geführt, wobei sich die Bewegungsbahn des Formkerns 10 beziehungsweise die genannten Richtungen quer, insbesondere senkrecht, zu der von den Werkzeugplatten 2,3 aufgespannten Planebene 16 (Fig. 1) erstrecken, deren Lage in der Fig. 1 stichpunktartig angedeutet ist. Sie verläuft senkrecht zur Zeichnungsebene von Fig. 1 zwischen den aneinandergrenzenden Werkzeugplatten 2, 3 hindurch. Bei dem Spritzgusswerkzeug von Fig. 4 ist ein Formkern 17 vorhanden, der lösbar an der auswerferseitigen Werkzeugplatte 2 fixiert ist. Denkbar ist aber auch, dass der Formkern 17 unabhängig oder zusätzlich dazu an der düsenseitigen Werkzeugplatte 3 fixiert ist.

Zur Herstellung von Formteilen 7 mit Durchbruch 8 und Formteilen 7' ohne Durchbruch 8 wird unter Verwendung eines Spritzgusswerkzeugs mit einem stempelförmigen und relativ zur auswerferseitigen Werkzeugplatte 2 beweglichen Formkern 10 wie folgt vorgegangen: Zur Herstellung eines Formteils 7' ohne Durchbruch (Fig. 7) wird ausgehend von der in Fig. 1 gezeigten Situation der Formkern 10 in der dargestellten Stellung, seiner Ruhestellung, belassen und schmelzflüssiges Kunststoffmaterial 9 in den Formhohlraum 4 eingespritzt. Hinsichtlich der Lage des Formkerns 10 ist es denkbar, dass dieser ein Stück weit in den Formhohlraum 4 hineinragt, wie in Fig. 2 dargestellt. Es bildet sich in diesem Falle zwar eine zur Querschnittsform des Formkerns 10 komplementäre Ausnehmung 18 an einer Seite des Formteils 7', welche dessen Rückseite 19 ist, nicht jedoch ein das Formteil durchsetzender Durchbruch.

Soll ein Formteil 7 mit Durchbruch 8 hergestellt werden, wird der Formkern 10 vor dem Einspritzen von Kunststoff in Vorschubrichtung 14 in den Formhohlraum hineingefahren und in seine Arbeitsstellung gebracht. Die entsprechende Position ist durch die gestrichelte Linie 20 in Fig. 1 angedeutet. Bei dieser Vorschubbewegung trifft der in seine Arbeitsstellung bewegte Formkern 10 mit seinem der düsenseitigen Werkzeugplatte 3 zugewandten Ende beziehungsweise mit seiner dort vorhandenen Stirnseite 23 auf die Innenseite 24 der düsenseitigen Werkzeugplatte auf. Dabei besteht die Gefahr, dass die Innenseite 24, die bei der Herstellung von Formteilen mit einer hochglänzenden Sichtseite 25 entsprechend poliert ist, mechanisch beeinträchtigt wird. Unter einer mechanischen Beeinträchtigung ist dabei jede Art der Beschädigung der Innenseite 24 zu verstehen. Eine Beschädigung mag sich zwar am Beginn der Herstellung einer Formteilcharge noch kaum bemerkbar machen. Mit zunehmender Schusszahl, das heißt zunehmender Stückzahl produzierter Formteile, kann sich an dem von dem Formkern 10 beaufschlagten Flächenbereich 26 der polierten Innenseite 24 der düsenseitigen Werkzeugplatte 3 ein Schadensbild ausbilden, welches in einem Formteil 7' ohne Durchbruch zu einem entsprechenden Oberflächenfehler 27 erkennbar ist, so dass das Formteil 7' aussortiert werden müsste.

Dieselbe Problematik tritt auch bei einem Spritzgussverfahren unter Verwendung eines Spritzgusswerkzeugs 1 b nach Fig. 4 auf. Der Formkern 17 ist hier bei der Herstellung eines Formteils mit Durchbruch zwar an der auswerferseitigen Werkzeugplatte 2 fixiert, also relativ zu dieser nicht beweglich. Beim Schließen des Spritzgusswerkzeugs jedoch bewegt sich die auswerferseitige Werkzeugplatte 2 und mit dieser der Formkern 17 auf die düsenseitige Werkzeugplatte 3 zu. Es wird somit auch hier der Formkern 17 in einer Vorschubrichtung 14 - welche der Schließrichtung 6 der auswerferseitigen Werkzeugplatte 2 entspricht - zur düsenseitigen, hier ortsfesten Werkzeugplatte 3 hin bewegt. Die lösbare Fixierung des Formteils 17 kann beispielsweise über einen an diesem vorhandenen Gewindebolzen 28, der im Fixierzustand in eine Gewindebohrung 29 der Werkzeugplatte 2 eingedreht ist, bewerkstelligt werden. Die Fixierung des Formkerns 17 an der Werkzeugplatte 2 erfolgt im geöffneten Zustand des Spritzgusswerkzeugs 1 b, wenn also die auswerferseitige Werkzeugplatte 2 in Öffnungsrichtung 5 von der anderen Werkzeugplatte 3 wegbewegt wurde und die Gewindebohrung 29 aufgrund eines ausreichenden Abstands zwischen den beiden Werkzeugplatten 2, 3 zugänglich ist. Beim Schließen des Spritzgusswerkzeugs 1 b wird die auswerferseitige Werkzeugplatte 2 in Schließrichtung 6 verfahren, wobei diese Bewegung der Vorschubrichtung 14 des Formkerns 17 entspricht. Im geschlossenen Zustand der Werkzeugplatten 2,3 befindet sich der Formkern 17 in seiner Arbeitsstellung.

Nach längerer Betriebsdauer und/oder wechselnden Betriebsbedingungen, etwa unterschiedlichen Drücken und Temperaturen besteht die Gefahr, dass sich die Abmessungsrelationen von Formkern 17 und Werkzeugplatten 2, 3 geringfügig ändern, so dass der Formkern 17 beim Schließen des Spritzgusswerkzeugs 1b die Innenseite 24 der Werkzeugplatte 3 in schädigender Weise touchiert. Die Folge ist dann ein Oberflächenfehler 27 an der Sichtseite 25 eines Formteils 7' ohne Durchbruch 8. Zur Herstellung eines Formteils 7'ohne Durchbruch kann die in der auswerferseitigen Werkzeugplatte 2 vorhandene Gewindebohrung 29 mit einem Abdeckteil, an dem ein in die Gewindebohrung 29 eingreifender Gewindezapfen 34 vorhanden ist, überdeckt werden. Das Abdeckteil 33 erzeugt bei einem Formteil 7' ohne Durchbruch eine nicht störende Ausnehmung 18 an der Rückseite 19 des Formteils 7'.

Zur Verhinderung oder Reduzierung von Oberflächenfehlern 27 können nun diverse Schutzmaßnahmen ergriffen werden beziehungsweise kann ein Spritzgusswerkzeug 1a verwendet werden, welches mindestens eine entsprechende Schutzeinrichtung umfasst.

Eine erfindungsgemäße Schutzmöglichkeit ist in Fig. 8 am Beispiel eines Spritzgusswerkzeugs 1a gezeigt. Das der düsenseitigen Werkzeugplatte 2 zugewandte Ende des Formkerns 10 ist mit einem Schutzelement 64 aus einem Material versehen, welches eine geringere Verschleißfestigkeit aufweist als das Material der düsenseitigen Werkzeugplatte 2. Falls bei einem Aufprall des Formkerns 10 auf die Innenseite 24 eine mechanische Abnutzung des von der Stirnfläche 23' des Schutzelements 64 beaufschlagten Flächenbereichs 26 der Innenseite 24 ist dadurch praktisch verhindert. Das Schutzelement 64 kann auf verschiedene Weise an dem Formkern 10 fixiert sein, beispielsweise über einen an seiner der Werkzeugplatte 2 abgewandten Seite angeformten Gewindezapfen 65, der in eine entsprechende Gewindebohrung 66 an dem der Werkzeugplatte 2 zugewandten Ende des Formkerns 10 eingeschraubt ist. Ein Schutzelement 64 der oben beschriebenen Art kann auch bei einem Spritzgusswerkzeug 1 b mit lösbar an der Werkzeugplatte 3 fixierten Formkern 17 eingesetzt werden.

In Fig. 9 ist eine Variante eines Formwerkzeugs gezeigt, welche zwei auswerferseitige, also mit einer Öffnungs- und Schließrichtung 5, 6 beziehungsweise 5', 6'beweglich an einer Spritzgussmaschine gelagerte Werkzeugplatten 2, 2'aufweist. Die genannten Aufeinanderzu- und Voneinanderweg-Richtungen der Werkzeugplatten 2, 2'verlaufen hier im Ausführungsbeispiel rechtwinklig zueinander. Alternativ können sie auch in einem beliebigen Winkel quer zueinander verlaufen. An der Werkzeugplatte 2 ist ein Formkern 10' beweglich gelagert, wobei dessen Bewegungsbahn so verläuft, dass er in einen zwischen der Werkzeugplatte 2'und der Werkzeugplatte 2 vorhandenen Teilabschnitts 74 hinein verfahrbar ist. Die Bewegungsbahn 75 des Formkern 10' bildet mit der Öffnungsbeziehungsweise Schließrichtung 5, 6 der Werkzeugplatte 2 einen Winkel 76. Der Formkern 10' kann alternativ auch an der Werkzeugplatte 2'vorhanden sein, was durch die die gestrichelte Linie 77 in Fig. 9 angedeutet ist.

### Bezugszeichenliste

- 1a: Spritzgusswerkzeug
- 1b: Spritzgusswerkzeug
- 2: Auswerferseitige Werkzeugplatte
- 2': Auswerferseitige Werkzeugplatte
- 3: Düsenseitige Werkzeugplatte
- 4: Formhohlraum
- 5: Öffnungsrichtung
- 5': Öffnungsrichtung
- 6: Schließrichtung
- 7': Schließrichtung
- 7: Formteil
- 7': Formteil
- 8: Durchbruch
- 9: Kunststoffmaterial
- 10: Formkern
- 10': Formkern
- 13: Öffnung
- 14: Vorschubrichtung
- 15: Rückschubrichtung
- 16: Planebene
- 17: Formkern
- 18: Ausnehmung
- 19: Rückseite
- 20: Gestrichelte Linie
- 23: Stirnseite
- 23': Stirnseite
- 24: Innenseite
- 25: Sichtseite
- 26: Flächenbereich
- 27: Oberflächenfehler
- 28: Gewindebolzen
- 29: Gewindebohrung
- 33: Blende
- 34: Gewindezapfen
- 64: Schutzelement
- 65: Gewindezapfen
- 66: Gewindebohrung
- 74: Teilabschnitt
- 75: Bewegungsbahn
- 76: Winkel
- 77: Gestrichelte Linie

## Patentansprüche

1. Spritzgussverfahren zur wahlweisen Herstellung von Formteilen (7, 7') mit und ohne Durchbruch (8), bei dem
- ein Spritzgusswerkzeug (1 a, 1 b) verwendet wird, welches mindestens einen von wenigstens einer düsenseitigen und wenigstens einer auswerferseitigen Werkzeugplatte (2, 3) umgrenzten Formhohlraum (4) und einen in dem Formhohlraum (4) zumindest teilweise positionierbaren, gegenüber mindestens einer der Werkzeugplatten (2, 3), insbesondere der düsenseitigen Werkzeugplatte (3), in einer Vor- und Rückschubrichtung (14, 15) relativ beweglichen Formkern (10, 17) aufweist, wobei dieser bei einer Bewegung in Vorschubrichtung (14) der jeweils anderen Werkzeugplatte (2, 3), insbesondere der düsenseitigen Werkzeugplatte (3), angenähert wird und sich bei einer Bewegung in Rückschubrichtung (15) von dieser entfernt,
- zur Herstellung eines Formteils (7) mit Durchbruch (8) der Formkern (10, 17) zumindest teilweise innerhalb des Formhohlraums (4) positioniert wird,
- zur Herstellung eines Formteils (7') ohne Durchbruch der Formkern (10, 17) zumindest teilweise aus dem Formhohlraum (4) entfernt wird, und
- mindestens eine Schutzmaßnahme vorgesehen ist, mit der die zu dem Formhohlraum weisende Innenfläche (24) der jeweiligen, insbesondere anderen, bevorzugt düsenseitigen, Werkzeugplatte (3) vor einer mechanischen Beeinträchtigung bei einer Vorschubbewegung des Formkerns (10, 17) geschützt wird,
**dadurch gekennzeichnet,**
**dass** die mindestens eine Schutzmaßnahme darin besteht, dass ein Formkern (10, 17) verwendet wird, an dessen einer Werkzeugplatte (2, 3) zugewandtem Ende ein Schutzelement (64) aus einem Material fixiert ist, welches eine geringere Verschleißfestigkeit aufweist als das Material der Werkzeugplatte (2, 3), mit der der Formkern (10, 17) zusammenwirkt.

2. Spritzgussverfahren nach Anspruch 1,
**gekennzeichnet durch**
die Verwendung eines Formkerns (10, 17) mit einem lösbar daran fixierten Schutzelement (64).

3. Spritzgussverfahren nach Anspruch 1 oder 2,
**dadurch gekennzeichnet,**
**dass** zur Herstellung eines Formteils (7) mit Durchbruch (8) ein Formkern (17) an der Innenseite einer Werkzeugplatte (2, 3), insbesondere auswerferseitigen Werkzeugplatte (2), lösbar fixiert wird, und zur Herstellung eines Formteils (7') ohne Durchbruch der Formkern (17) von der Werkzeugplatte (2, 3) entfernt wird.

4. Spritzgusswerkzeug (1) zur wahlweisen Herstellung von Formteilen (7, 7') mit und ohne Durchbruch (8), welches mindestens einen von wenigstens einer düsenseitigen und wenigstens einer auswerferseitigen Werkzeugplatte (2, 3) umgrenzten Formhohlraum (4) und einen gegenüber einer Werkzeugplatte (2, 3), insbesondere der düsenseitigen Werkzeugplatte (3), in einer Vor- und Rückschubrichtung (14, 15) relativ beweglichen Formkern (10, 17) aufweist, wobei der Formkern (10, 17) derart ausgestaltet ist, dass er zur Herstellung eines Formteils (7) mit Durchbruch (8) zumindest teilweise innerhalb des Formhohlraums (4) positionierbar ist, und zur Herstellung eines Formteils (7') ohne Durchbruch zumindest teilweise aus dem Formhohlraum (4) entfernbar ist, und dass mindestens eine Schutzeinrichtung zum Schutz der Innenfläche (24) der jeweiligen Werkzeugplatte (2, 3), insbesondere der düsenseitigen Werkzeugplatte (2), vor einer mechanischen Beeinträchtigung bei einer Vorschubbewegung des Formkerns (10, 17) vorhanden ist,
**dadurch gekennzeichnet,**
**dass** an dem mit einer Werkzeugplatte (2, 3), insbesondere mit der düsenseitigen Werkzeugplatte (3), zusammenwirkenden Ende des Formkerns (10, 17) ein Schutzelement (64) aus einem Material fixiert ist, welches eine geringere Verschleißfestigkeit aufweist als das Material dieser Werkzeugplatte (2, 3).

5. Spritzgusswerkzeug (1) nach Anspruch 4,
**gekennzeichnet durch**
einen Formkern (10, 17) mit einem daran lösbar fixierten Schutzelement (64).

6. Spritzgusswerkzeug (1) nach Anspruch 4 oder 5,
**gekennzeichnet durch**
einen Formkern (17), der so ausgestaltet ist, dass er zur Herstellung eines einen Durchbruch (8) aufweisenden Formteils (7) lösbar an der Innenseite (24) zumindest einer der Werkzeugplatten (2, 3), insbesondere der auswerferseitigen Werkzeugplatte (2), fixierbar und zur Herstellung eines Formteils (7') ohne Durchbruch (8) von der Werkzeugplatte (2) entfernbar ist.

## Claims

1. Injection-moulding process for optionally manufacturing moulded parts (7, 7') with and without a breakthrough (8), in which
- an injection-moulding tool (1a, 1b) is used, having at least one moulding cavity (4) delimited by at least one nozzle-side and at least one ejector-side mould platen (2, 3) and a mould core (10, 17) at least partly able to be positioned in the mould cavity (4), movable in relation to at least one of the mould platens (2, 3), especially the nozzle-side mould platen (3), in an advance and withdrawal direction (14, 15), whereby, for the movement in the advance direction (14) it is moved closer to the other mould platen (2, 3), especially the nozzle-side mould platen (3), in each case and for a movement in the withdrawal direction (15) it is moved away from the latter,
- to manufacture a moulded part (7) with breakthrough (8) the mould core (10, 17) is positioned at least partly in the mould cavity (4),
- to manufacture a moulded part (7') without breakthrough, the mould core (10, 17) is removed at least partly from the mould cavity (4), and
- at least one protective measure is provided, with which the inner surface (24) pointing towards the mould cavity of the respective, especially other, preferably nozzle-side mould platen (3) is protected against adverse mechanical effects during an advancing movement of the mould core (10, 17)
**characterised in that**
the at least one protective measure consists of a mould core (10, 17) being used, fixed to the end of which facing towards a mould platen (2, 3) is a protective element (64) made from a material which has a lower resistance to wear than the material of the mould platen (2, 3) with which the mould core (10, 17) interacts.

2. Injection moulding process according to claim 1,
**characterised by**
the use of a mould core (10, 17) with a protective element (64) fixed detachably thereto.

3. Injection moulding process according to claim 1 or 2,
**characterised in that**,
to manufacture a moulded part (7) with breakthrough (8) a mould core (17) is fixed detachably to the inner side of a mould platen (2, 3), especially the ejector-side mould platen (2) and to manufacture a moulded part (7') without breakthrough, the mould core (17) is removed from the mould platen (2, 3).

4. Injection-moulding tool (1) for the optional manufacturing of moulded parts (7, 7') with and without breakthrough (8), having at least one mould cavity (4) delimited by at least one nozzle-side and at least one ejector side mould platen (2, 3) and a mould core (10, 17) able to be moved in an advance direction and a withdrawal direction (14, 15) relative to a mould platen (2, 3), especially the nozzle-side mould platen (3), whereby the mould core (10, 17) is designed such that, to manufacture a moulded part (7) with breakthrough (8), it is able to be positioned at least partly within the mould cavity (4), and, to manufacture a moulded part (7') without breakthrough (8), it is able to be removed at least partly from the mould cavity (4),and that at least one protective device is present for protecting the inner surface (24) of the respective mould platen (2, 3), especially the nozzle-side mould platen (2), against adverse mechanical effects during an advancing movement of the mould core (10, 17), **characterised in that**
a protective element (64) made from a material having a lower wear resistance than the material of this mould platen (2, 3) is fixed to the end of the mould core (10, 17) interacting with a mould platen (2, 3) especially with a nozzle-side mould platen (3).

5. Injection moulding tool according to claim 4,
**characterised by**
a mould core (10, 17) with a protective element (64) fixed detachably to it.

6. Injection moulding tool according to claim 4 or 5,
**characterised by**
a mould core (17) designed so that, for manufacturing a moulded part (7) having a breakthrough (8), it is able to be fixed detachably to the inner side (24) of at least one of the mould platens (2, 3), especially the ejector-side mould platen (2) and for manufacturing a moulded part (7') without a breakthrough (8), it is able to be removed from the mould platen (2).

## Revendications

1. Procédé de moulage par injection destiné à une fabrication de pièces moulées (7, 7') facultativement avec et sans trouée (8), dans lequel
- un outil de moulage par injection (1a, 1b) est utilisé, qui présente au moins une cavité de moulage (4) entourée d'au moins une platine (2, 3) côté buse et d'au moins une platine (2, 3) côté éjecteur et un noyau de moulage (10, 17) relativement mobile dans une direction de poussée avant et arrière (14, 15) par rapport à au moins une des platines (2, 3), en particulier par rapport à la platine côté buse (3), pouvant être positionné au moins partiellement dans la cavité de moulage (4), dans lequel ledit noyau de moulage est rapproché de l'autre platine (2, 3) respective, en particulier de la platine côté buse (3), dans le cas d'un mouvement dans la direction de poussée avant (14) et s'éloigne de ladite platine dans le cas d'un mouvement dans la direction de poussée arrière (15),
- le noyau de moulage (10, 17) est positionné au moins partiellement à l'intérieur de la cavité du moulage (4) en vue d'une fabrication d'une pièce de moulage (7) avec trouée (8),
- le noyau de moulage (10, 17) est éloigné au moins partiellement de la cavité de moulage (4) en vue d'une fabrication d'une pièce de moulage (7') sans trouée, et
- au moins une mesure de protection est prévue, grâce à laquelle la surface intérieure (24), tournée vers la cavité de moulage, de la platine (3) respective, en particulier l'autre platine, de manière préférée la platine côté buse, est protégée d'une atteinte mécanique lors d'un déplacement de poussée avant du noyau de moulage (10, 17),
**caractérisé en ce que**
la au moins une mesure consiste à utiliser un noyau de moulage (10, 17) sur l'extrémité, tournée vers une platine (2, 3), de laquelle est fixé un élément de protection (64) constitué d'un matériau qui présente une résistance à l'usure plus faible que le matériau de la platine (2, 3) avec laquelle collabore le noyau de moulage (10, 17).

2. Procédé de moulage par injection selon la revendication 1,
**caractérisé par** l'utilisation d'un noyau de moulage (10, 17) présentant un élément de protection (64) fixé amovible sur celui-ci.

3. Procédé de moulage par injection selon la revendication 1 ou 2,
**caractérisé en ce que**,
un noyau de moulage (17) est fixé amovible sur le côté intérieur d'une platine (2, 3), en particulier une platine côté éjecteur (2), en vue d'une fabrication d'une pièce moulée (7), et le noyau de moulage (17) est éloigné de la platine (2, 3) en vue d'une fabrication d'une pièce moulée (7') sans trouée.

4. Outil de moulage par injection (1) destiné à une fabrication de pièces moulées (7, 7') facultativement avec et sans trouée (8), qui présente au moins une cavité de moulage (4) entourée d'au moins une platine (2, 3) côté buse et au moins une platine (2, 3) côté éjecteur et un noyau de moulage (10, 17) relativement mobile dans une direction de poussée avant et arrière (14, 15) par rapport à une platine (2, 3), en particulier la platine côté buse (3), le noyau de moulage (10, 17) étant conçu de telle manière qu'il peut être positionné au moins partiellement à l'intérieur de la cavité de moulage (4) en vue d'une fabrication d'une pièce moulée (7) avec trouée (8), et peut être éloigné au moins partiellement de la cavité de moulage (4) en vue d'une fabrication d'une pièce moulée (7') sans trouée, et au moins un dispositif de protection destiné à protéger la surface intérieure (24) de la platine respective (2, 3), en particulier de la platine côté buse (2), d'une atteinte mécanique, est présent dans le cas d'un mouvement de poussée vers l'avant du noyau de moulage (10, 17),
**caractérisé en ce que**
un élément de protection (64) constitué d'un matériau qui présente une résistance à l'usure plus faible que le matériau de ladite platine (2, 3) est fixé au niveau de l'extrémité collaborant avec une platine (2, 3), en particulier avec la platine côté buse (3), du noyau de moulage (10, 17).

5. Outil de moulage par injection (1) selon la revendication 4,
**caractérisé par**
un noyau de moulage (10, 17) comportant un élément de protection (64) fixé amovible sur celui-ci.

6. Outil de moulage par injection (1) selon la revendication 4 ou 5,
**caractérisé par** un noyau de moulage (17) qui est conçu de telle manière qu'il peut être fixé amovible sur le côté intérieur (24) d'au moins une des platines (2, 3), en particulier de la platine côté éjecteur (2), en vue d'une fabrication d'une pièce moulée (7) présentant une trouée (8) et peut être éloigné de la platine (2) en vue d'une fabrication d'une pièce moulée (7') sans trouée (8).
